# EUROPÄISCHE PATENTSCHRIFT

(11) **EP 2 705 243 B1**
(45) Veröffentlichungstag und Bekanntmachung des Hinweises auf die Patenterteilung: **21.06.2017**
(21) Anmeldenummer: 12709876.2
(22) Anmeldetag: 16.03.2012
(51) Int. Cl.: F02M 69/00, F02M 63/02, F02M 55/02, F02M 69/46

(54) **BRENNSTOFFVERTEILER**
FUEL DISTRIBUTOR
DISTRIBUTEUR DE CARBURANT

(30) Priorität: 02.05.2011 DE 102011075061
(43) Veröffentlichungstag der Anmeldung: 12.03.2014
(73) Patentinhaber: Robert Bosch GmbH, 70442 Stuttgart (DE)
(72) Erfinder: MAIER, Martin, 71696 Moeglingen (DE); FEIGL, Markus, 71706 Markgroeningen (DE); UHRIG, Holger, 96117 Memmelsdorf (DE); SCHNEIDER, Helmut, 72631 Aichtal (DE); HAUTMANN, Nikolaus, 71254 Ditzingen (DE); UHLENBROCK, Dietmar, 70439 Stuttgart (DE); GOEHNER, Martin, 71665 Vaihingen (DE)
(86) Internationale Anmeldenummer: PCT/EP2012/054712
(87) Internationale Veröffentlichungsnummer: WO 2012/150081

(56) Entgegenhaltungen:
- EP-B1- 1 512 867
- WO-A1-03/091567
- WO-A1-2006/126636
- WO-A1-2009/009846
- DE-A1- 4 412 792
- DE-A1-102006 061 563
- GB-A- 2 324 337
- US-A1- 2005 109 324
- US-B1- 7 146 700

## Beschreibung

### Stand der Technik

Die Erfindung betrifft einen Brennstoffverteiler, der insbesondere für Brennstoffeinspritzanlagen von gemischverdichtenden, fremdgezündeten Brennkraftmaschinen dient. Speziell betrifft die Erfindung das Gebiet der als Mitteldrucksysteme ausgestalteten Brennstoffeinspritzanlagen.

Bei Brennstoffeinspritzanlagen von Kraftfahrzeugen ist es denkbar, dass eine Brennstoffverteilerleiste zum Einsatz kommt, die für Hochdruckanwendungen aus Stahl ausgebildet ist. Hierdurch kann eine Druckfestigkeit von Drücken von mehr als 15 MPa (150 bar) erreicht werden. Solch ein Hochdruckrail aus Stahl kann als Lötrail hergestellt werden. Hierbei dient ein Stahlrohr als Basis, an das die einzelnen Komponenten, insbesondere Verschlusskappen, Anschraubhalter, ein Hochdruckanschluss und die Schnittstellen zum Einspritzventil angelötet werden. Diese Ausgestaltung ist allerdings mit hohen Herstellungskosten verbunden.

Ferner können Brennstoffverteilerleisten für Niederdruckanwendungen bei 0,3 MPa (3 bar) bis 0,5 MPa (5 bar) für diesbezügliche Anwendungen zum Einsatz kommen. Der Anwendungsbereich solcher Brennstoffverteilerleisten für Niederdruckanwendungen ist allerdings auf diesen Niederdruckbereich begrenzt.

### Offenbarung der Erfindung

Der erfindungsgemäße Brennstoffverteiler mit den Merkmalen des Anspruchs 1 hat den Vorteil, dass ein für einen Mitteldruck geeigneter Brennstoffverteiler mit vergleichsweise niedrigen Herstellungskosten geschaffen werden kann. Das erfindungsgemäße Verfahren mit den Merkmalen des Anspruchs 11 und das erfindungsgemäße Verfahren mit den Merkmalen des Anspruchs 12 ermöglichen die Herstellung eines Brennstoffverteilers, der solch einen Vorteil hat.

(Einschub auf Seite 1 am Ende des Abschnitts "Stand der Technik" der ursprünglich eingereichten Anmeldungsunterlagen)

Aus der WO 03/091567 A1 ist bereits ein Brennstoffverteiler bekannt, der insbesondere für Brennstoffeinspritzanlagen von gemischverdichtenden, fremdgezündeten Brennkraftmaschinen geeignet ist. Der Brennstoffverteiler weist eine erste Halbschale und eine zweite Halbschale auf, zwischen denen ein Brennstoffraum ausgestaltet ist, wobei an der ersten Halbschale mehrere Tassen, die der Aufnahme von Einspritzventilen dienen, vorgesehen sind. Die erste Halbschale und die zweite Halbschale sind mittels Löten oder Schweißen stoffschlüssig miteinander verbunden. Die Tassen sind mittig entlang der Längsachse der ersten Halbschale angebracht, so dass die Tassen unmittelbar in den von den beiden Halbschalen eingeschlossenen Brennstoffraum münden und von dort direkt mit Brennstoff versorgt werden, während die Randbereiche der beiden Halbschalen ausschließlich der gegenseitigen stoffschlüssigen Befestigung dienen bzw. Öffnungen zum Einbringen von Befestigungsmitteln des Brennstoffverteilers in ihnen vorgesehen sind.

(Fortsetzung mit dem Abschnitt "Offenbarung der Erfindung" der ursprünglich eingereichten Anmeldungsunterlagen)

Durch die in den Unteransprüchen aufgeführten Maßnahmen sind vorteilhafte Weiterbildungen des im Anspruch 1 angegebenen Brennstoffverteilers, des im Anspruch 11 angegebenen Verfahrens und des im Anspruch 12 angegebenen Verfahrens möglich.

Vorteilhaft ist es, dass die erste Halbschale eine Anlagefläche aufweist, dass die zweite Halbschale eine Anlagefläche aufweist, dass die Anlagefläche der ersten Halbschale und die Anlagefläche der zweiten Halbschale einander zugewandt sind und dass die erste Halbschale und die zweite Halbschale mittels eines zwischen die Anlagefläche der ersten Halbschale und die Anlagefläche der zweiten Halbschale eingebrachten Lötmittels durch Löten stoffschlüssig miteinander verbunden sind. Hierbei ist es ferner vorteilhaft, dass die erste Halbschale und die zweite Halbschale mittels einer zwischen die Anlagefläche der ersten Halbschale und die Anlagefläche der zweiten Halbschale eingebrachten Lotfolie durch Löten stoffschlüssig miteinander verbunden sind. Die beiden Anlageflächen der Halbschalen sind vorzugsweise eben ausgeführt, so dass sich für die Ausbildung der Lötverbindung eine vorteilhafte Kontaktfläche ergibt. Diese Kontaktfläche kann dabei auch gewisse Bereiche umgreifen, die zum Beispiel im Bereich von Tassen vorgesehen sind. Außerdem kann die Kontaktfläche dadurch relativ groß ausgestaltet sein. Die beiden zueinander positionierten Halbschalen mit der dazwischen positionierten Lotfolie können beispielsweise durch einen Lötofen, der insbesondere als Durchlaufofen ausgestaltet sein kann, miteinander verlötet werden. Somit ergibt sich eine kostengünstige Herstellung im Rahmen einer Serienproduktion.

Vorteilhaft ist es allerdings auch, dass ein Rand der ersten Halbschale und ein Rand der zweiten Halbschale geometrisch zumindest abschnittsweise nebeneinander liegend ausgestaltet sind und dass die erste Halbschale und die zweite Halbschale durch eine umfänglich entlang des Randes der ersten Halbschale und des Randes der zweiten Halbschale verlaufende Schweißnaht stoffschlüssig miteinander verbunden sind. Im Ausgangszustand können die beiden Halbschalen hierbei in vorteilhafter Weise durch Blechhälften gebildet sein, die an ihrem Rand miteinander verschweißt werden. Anschließend kann in vorteilhafter Weise ein Aufblasen der Blechhälften in die Halbschalen mittels Hydroumformung erfolgen. Möglich ist auch eine Magnetumformung, um die endgültige Geometrie herzustellen.

Vorteilhaft ist es, dass die Tassen durch Tiefziehen der ersten Halbschale beziehungsweise der zweiten Halbschale ausgestaltet sind. Die Tassen sind in vorteilhafter Weise an den Halbschalen ausgestaltet, wobei die Tassen vorzugsweise an einer der Halbschalen ausgestaltet sind. Hierdurch ist ein separates Anlöten, Anschweißen oder vergleichbares Anbringen der Tassen an die Halbschalen nicht erforderlich, so dass diesbezügliche Verfahrensschritte eingespart werden können. Außerdem kann in Bezug auf den bevorzugten Anwendungsbereich des Mitteldrucks eine Ausgestaltung der Halbschalen aus einem Material erfolgen, das die Ausgestaltung der Tassen an zumindest einer der Halbschalen durch Tiefziehen ermöglicht. Hierdurch können die Herstellungskostenn weiter verringert werden.

Vorteilhaft ist es auch, dass eine in den Brennstoffraum führende Anschlussbuchse vorgesehen ist und dass die erste Halbschale und/oder die zweite Halbschale zumindest eine Ausformung aufweisen, in die die Anschlussbuchse eingesetzt ist. Somit kann die Anschlussbuchse in vorteilhafter Weise zwischen die Halbschalen eingesetzt werden, wobei beispielsweise beim Ausgestalten einer Lötverbindung zwischen den Halbschalen ein gleichzeitiges Einlöten der Anschlussbuchse in die beiden Halbschalen im Bereich der Ausformung möglich ist.

Ferner ist es vorteilhaft, dass an der ersten Halbschale und/oder an der zweiten Halbschale zumindest eine Befestigungslasche angeformt ist. Für den bevorzugten Einsatzbereich des Mitteldrucks ermöglicht hierbei wiederum das geeignet gewählte Material für die Halbschalen eine kostengünstige Ausgestaltung der Befestigungslasche. Ferner ist es auch möglich, dass weitere Ausformungen an den Halbschalen vorgesehen sind, die kostengünstig hergestellt werden können. Ein Beispiel für solche Ausformungen sind Sicken, die die Formstabilität verbessern.

Vorteilhaft ist es auch, dass zwischen den Tassen und dem Brennstoffraum jeweils ein Verbindungskanal vorgesehen ist, der durch eine Anprägung an der ersten Halbschale und/oder eine Anprägung an der zweiten Halbschale ausgestaltet ist. Hierdurch kann ein vorzugsweise kurzer Verbindungskanal zwischen den Tassen und dem Brennstoffraum ausgestaltet werden, so dass sich insgesamt eine optimierte Ausgestaltung des Brennstoffverteilers, insbesondere mit kompakter Ausgestaltung und hoher Stabilität, ergibt.

Die Tassen können je nach Anwendungsfall in vorteilhafter Weise nachbearbeitet werden. Hierbei ist es vorteilhaft, dass ein Boden der Tassen durch eine spanende Bearbeitung abgetragen ist. Ferner ist es vorteilhaft, dass die Tassen als angesenkte oder angeprägte Tassen ausgestaltet sind. Hierdurch kann die Montage von Einspritzventilen an den Tassen erleichtert werden. Ferner kann die Verbindung der Einspritzventile mit den Tassen verbessert werden, indem in vorteilhafter Weise die Innenwände der Tassen durch eine spanende Bearbeitung nachbearbeitet werden. Hierbei eignet sich besonders ein Honen, um die Oberflächenqualität zu verbessern.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 einen Brennstoffverteiler in einer schematischen Darstellung entsprechend einem Ausführungsbeispiel der Erfindung;
Fig. 2 den in Fig. 1 dargestellten Brennstoffverteiler aus der mit II bezeichneten Blickrichtung entsprechend dem Ausführungsbeispiel der Erfindung und
Fig. 3 einen schematischen Schnitt durch den in Fig. 1 dargestellten Brennstoffverteiler entlang der mit III bezeichneten Schnittlinie entsprechend dem Ausführungsbeispiel der Erfindung.

### Ausführungsformen der Erfindung

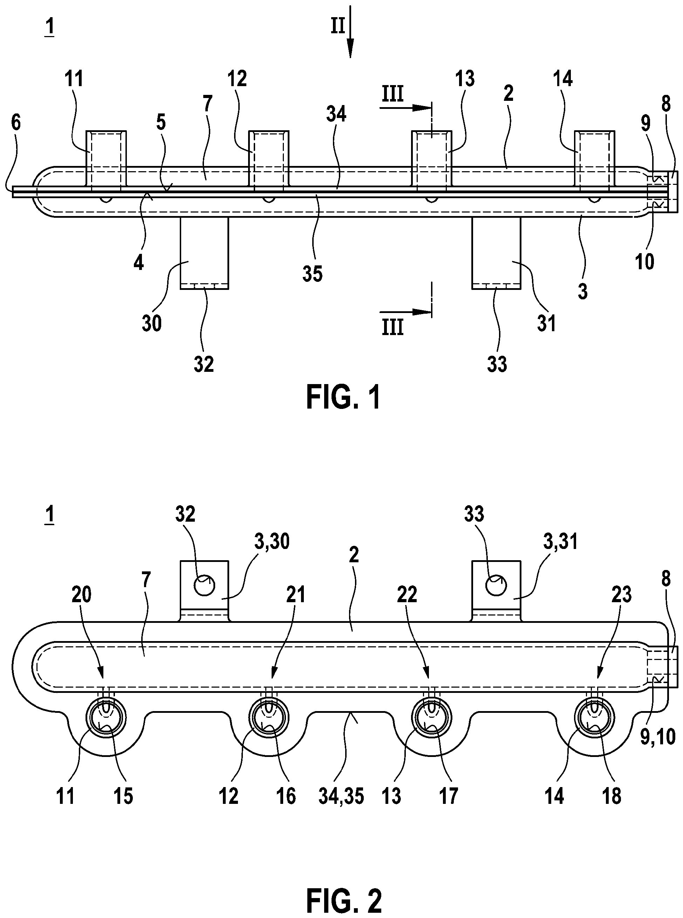

Fig. 1 zeigt ein Ausführungsbeispiel eines Brennstoffverteilers 1 der Erfindung in einer schematischen Darstellung. Der Brennstoffverteiler 1 kann hierbei insbesondere in Form einer Brennstoffverteilerleiste 1 ausgestaltet sein. Der Brennstoffverteiler 1 eignet sich besonders für Brennstoffeinspritzanlagen von gemischverdichtenden, fremgezündeten Brennkraftmaschinen. Speziell eignet sich der Brennstoffverteiler 1 hierbei für ein Mitteldrucksystem. Der Mitteldruck für solch ein Mitteldrucksystem kann hierbei im Bereich von 3 MPa bis 10 MPa beziehungsweise 30 bar bis 100 bar liegen. Insbesondere kann der Mitteldruck im Bereich von 5 MPa bis 7 MPa beziehungsweise 50 bar bis 70 bar liegen. Der erfindungsgemäße Brennstoffverteiler 1 eignet sich allerdings auch für andere Anwendungsfälle.

Der Brennstoffverteiler 1 weist eine erste Halbschale 2 und eine zweite Halbschale 3 auf. Die erste Halbschale 2 weist eine Anlagefläche 4 auf. Ferner weist die zweite Halbschale 3 eine Anlagefläche 5 auf. Die Anlageflächen 4, 5 der Halbschalen 2, 3 sind einander zugewandt. Bei der Herstellung des Brennstoffverteilers 1 wird zwischen die Anlagenflächen 4, 5 eine Lotfolie 6 eingebracht. Mittels eines Lötofens werden die beiden Halbschalen 2, 3 dann miteinander verlötet. Somit ist eine stoffschlüssige Verbindung gewährleistet.

Zwischen den beiden Halbschalen 2, 3 ist ein Brennstoffraum 7 ausgestaltet, der durch eine unterbrochene Linie 7 veranschaulicht ist. Der Brennstoffraum 7 ist in diesem Ausführungsbeispiel als länglicher Brennstoffraum 7 ausgestaltet. Hierbei hat der Brennstoffraum 7 die Funktion eines Speicherraums 7. Der Brennstoffraum 7 wird von den beiden Halbschalen 2, 3 gemeinsam gebildet.

Die beiden Halbschalen 2, 3 können beispielsweise als Stanz- und/oder Biegeteile aus legiertem Stahl gebildet sein. Zwischen den beiden Halbschalen 2, 3 ist außerdem eine Anschlussbuchse 8 angeordnet. Die Anschlussbuchse 8 dient hierbei als Hydraulikanschluss 8, um eine Brennstoffleitung mit dem Brennstoffverteiler 1 zu verbinden. Hierdurch kann Brennstoff aus der angeschlossenen Brennstoffleitung in den Brennstoffraum 7 geführt werden. Der Brennstoff weist hierbei vorzugsweise einen Mitteldruck aus dem oben genannten Mitteldruckbereich auf. Die Anschlussbuchse 8 kann hierbei als Gewindebuchse 8 ausgestaltet sein. Die Anschlussbuchse 8 kann beispielsweise als Drehteil ausgeführt sein. Die Anschlussbuchse 8 kann aus einem legierten Stahl gebildet sein. Zum Aufnehmen der Anschlussbuchse 8 weisen die Halbschalen 2, 3 jeweils eine Ausformung 9, 10 auf, die im zusammengesetzten Zustand der Halbschalen 2, 3 beispielsweise eine zylinderförmige Aufnahme 9, 10 für die Anschlussbuchse 8 bilden. Die Anschlussbuchse 8 kann hierbei in die Ausformungen 9, 10 eingelötet sein.

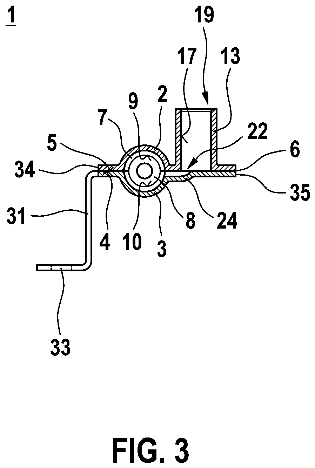

Der Brennstoffverteiler 1 ist im Folgenden auch unter Bezugnahme auf die Fig. 2 und 3 weiter beschrieben.

Fig. 2 zeigt den in Fig. 1 dargestellten Brennstoffverteiler 1 aus der mit II bezeichneten Blickrichtung. Fig. 3 zeigt den in Fig. 1 dargestellten Brennstoffverteiler 1 in einer schematischen Schnittdarstellung entlang der mit III bezeichneten Schnittlinie. An der ersten Halbschale 2 sind Tassen 11, 12, 13, 14 ausgestaltet. Die Ausgestaltung der Tassen 11 bis 14 kann durch Tiefziehen erfolgen. Innenwände 15, 16, 17, 18 der Tassen 11 bis 14 sind vorzugsweise nachbearbeitet, insbesondere durch eine spanende Bearbeitung, beispielsweise durch Honen. Hierdurch kann die Oberfläche der Wände 15 bis 16 verbessert werden. Hierdurch kann die Oberflächenqualität der Innenwände 15 bis 18 der Tassen 11 bis 14 speziell in Bezug auf eine erforderliche Dichtung verbessert werden. Beispielsweise kann durch Ziehriefen die Oberflächenqualität und somit eine mögliche Dichtwirkung beeinträchtigt sein. Solche Ziehriefen können durch die spanende Bearbeitung dann geglättet werden. Ein Boden der tiefgezogenen Tassen 11 bis 14 kann ebenfalls durch eine spanende Bearbeitung abgetragen werden. Zum sicheren Einführen der Einspritzventile, insbesondere mittels eines O-Rings, können die Tassen 11 bis 14 angesenkt oder angeprägt sein. Solch eine Ansenkung 19 beziehungsweise Anprägung 19 ist exemplarisch an der Tasse 13 in der Fig. 3 dargestellt.

Zwischen den Tassen 11 bis 14 und dem Brennstoffraum 7 ist jeweils ein Verbindungskanal 20, 21, 22, 23 vorgesehen. Über die Verbindungskanäle 20 bis 23 gelangt im Betrieb der Brennstoff aus dem Brennstoffraum 7 in die Tassen 11 bis 14, an denen die Einspritzventile montiert sind. Somit kann der unter dem Mitteldruck stehende Brennstoff den Einspritzventilen zugeführt werden.

Wie in der Fig. 3 dargestellt, ist der Verbindungskanal 22 zwischen dem Brennstoffraum 7 und der Tasse 13 in diesem Ausführungsbeispiel durch eine Anprägung 24 an der zweiten Halbschale 3 ausgestaltet. Zusätzlich oder alternativ kann der Verbindungskanal 22 auch durch eine Anprägung an der ersten Halbschale 2 ausgestaltet sein. Die Ausgestaltung der Verbindungskanäle 20, 21, 23 kann in entsprechender Weise erfolgen.

In diesem Ausführungsbeispiel sind an der zweiten Halbschale 3 Befestigungslaschen 30, 31 angeformt. An den Befestigungslaschen 30, 31 sind Bohrungen 32, 33 vorgesehen. Hierdurch kann der Brennstoffverteiler 1 beispielsweise im Motorraum an einer Brennkraftmaschine montiert werden. Zusätzlich oder alternativ können solche Befestigungslaschen auch an der ersten Halbschale 2 angeformt sein.

Die Materialstärke der Halbschalen 2, 3 ist von der gewünschten Dauerfestigkeit beziehungsweise Zeitfestigkeit abhängig. Hierbei können Sicken oder dergleichen in die Halbschalen 2, 3 eingearbeitet werden, um die Formstabilität zu verbessern.

Die Anschlussbuchse 8 kann beispielsweise aus einem legierten Stahl ausgebildet sein. Die Anschlussbuchse 8 sitzt in diesem Ausführungsbeispiel in der durch die Ausformungen 9, 10 gebildeten Formausprägung 9, 10 beider Halbschalen 2, 3. Es sind allerdings auch andere Möglichkeiten denkbar, um solch eine Anschlussbuchse 8 an den Halbschalen 2, 3 zu befestigen.

Zur Fixierung der beiden Halbschalen 2, 3 während der Herstellung können mindestens drei Fügehilfen an den Halbschalen 2, 3 angeprägt werden. Diese Fügehilfen sind dem Toxfügen vergleichbar. Jedoch werden solche Fügehilfen vorzugsweise nicht im gefügten Zustand der Halbschalen 2, 3 angeprägt, sondern im Zuge der allgemeinen Formgebung. Die gewählten Durchmesser beziehungsweise Toleranzen dieser Fügehilfe gewährleisten, dass während des Lötarbeitsgangs beide Halbschalen 2, 3 in Position bleiben.

Bei der Herstellung des Brennstoffverteilers 1 kann die erste Halbschale 2 in die Aufnahme einer Presse eingelegt werden. Dann kann die Lotfolie 6 über die Fügehilfen gesichert auf die erste Halbschale 2 gelegt werden. Die Anschlussbuchse 8 wird in die Ausformung 9 eingefügt und ebenfalls mit Lotfolie umgeben. Die zweite Halbschale 3 wird dann aufgesetzt, wobei die Fixierung über die Fügehilfen erfolgt. Die Presse wird ausgelöst und drückt die beiden Halbschalen 2, 3 zusammen. Der Brennstoffverteiler 1 wird dann aus der Presse genommen und auf das Förderband des Lötofens gelegt.

Nach dem Lötarbeitsgang wird der Boden der tiefgezogenen Tassen 11 bis 14 spanend abgetragen. Zum sicheren Einführen der Einspritzventile werden die Tassen 11 bis 14 angesenkt oder angeprägt, so dass die Ansenkung beziehungsweise Anprägung 19 ausgestaltet ist. Sofern die Oberflächenqualität der Innenwände 15 bis 18 der Tassen 11 bis 14 für die Dichtung nicht ausreichend ist, kann eine geeignete Nachbearbeitung, beispielsweise durch Honen, erfolgen. Nach einer Sicht- und Dichtprüfung kann der Brennstoffverteiler 1 abgeliefert werden.

Der Brennstoffverteiler 1 kann auch auf andere Weise hergestellt werden. Hierfür können Blechhälften 2, 3 als Ausgangsmaterial dienen, die an ihren Rändern 34, 35 miteinander verschweißt werden. Hierbei werden die beiden Blechhälften 2, 3 so aneinander gefügt, dass die Anlageflächen 4, 5 einander zugewandt sind und die Ränder 34, 35 nebeneinander liegend angeordnet sind. Dadurch kann umfänglich eine Schweißnaht entlang der nebeneinander liegenden Ränder 34, 35 ausgestaltet werden. Anschließend kann durch Hydroumformung oder durch Magnetumformung die endgültige Geometrie der Blechhälften 2, 3 erzeugt werden.

In diesem Fall werden als Ausgangsmaterial zwei passend im Umfang ausgestanzte Blechhälften 2, 3 am Umfang rundum verschweißt. Beim Hydroumformen wird ein Fluid mit hohem Druck zwischen die beiden Blechhälften 2, 3 eingepresst, so dass sich die miteinander verbundenen Blechhälften 2, 3 ausblasen, bis eine rohrähnliche Geometrie entsteht. Durch das Hydroumformen werden hierdurch aus den Blechhälften 2, 3 die Halbschalen 2, 3 ausgestaltet.

In entsprechender Weise werden beim Magnetumformen die Blechhälften 2, 3 in ihrer endgültigen Geometrie ausgestaltet.

Die Erfindung ist nicht auf die beschriebenen Ausführungsbeispiele beschränkt.

## Patentansprüche

1. Brennstoffverteiler (1), insbesondere für Brennstoffeinspritzanlagen von gemischverdichtenden, fremdgezündeten Brennkraftmaschinen, mit einer ersten Halbschale (2) und einer zweiten Halbschale (3), zwischen denen ein Brennstoffraum (7) ausgestaltet ist, wobei an der ersten Halbschale (2) und/oder der zweiten Halbschale (3) mehrere Tassen (11 - 14) vorgesehen sind und wobei die erste Halbschale (2) und die zweite Halbschale (3) stoffschlüssig miteinander verbunden sind, wobei an der ersten Halbschale (2) ein Rand (34) und an der zweiten Halbschale (3) ein Rand (35) vorgesehen sind, an denen die Halbschalen (2, 3) aneinander gefügt sind, **dadurch gekennzeichnet**, das die Tassen (11 - 14), die der Aufnahme von Einspritzventilen dienen, an einem dieser Ränder (34, 35) angebracht sind, so dass die Tassen (11 - 14) abseits des von den beiden Halbschalen (2, 3) eingeschlossenen Brennstoffraums (7) liegen.

2. Brennstoffverteiler nach Anspruch 1,
**dadurch gekennzeichnet,**
**dass** die erste Halbschale (2) eine Anlagefläche (4) aufweist, dass die zweite Halbschale (3) eine Anlagefläche (5) aufweist, dass die Anlagefläche (4) der ersten Halbschale (2) und die Anlagefläche (5) der zweiten Halbschale (3) einander zugewandt sind und dass die erste Halbschale (2) und die zweite Halbschale (3) mittels eines zwischen die Anlagefläche (4) der ersten Halbschale (2) und die Anlagefläche (5) der zweiten Halbschale (3) eingebrachten Lotmittels durch Löten stoffschlüssig miteinander verbunden sind.

3. Brennstoffverteiler nach Anspruch 2,
**dadurch gekennzeichnet,**
**dass** die erste Halbschale (2) und die zweite Halbschale (3) mittels einer zwischen die Anlagefläche (4) der ersten Halbschale (2) und die Anlagefläche (5) der zweiten Halbschale (3) eingebrachten Lotfolie (6) durch Löten stoffschlüssig miteinander verbunden sind.

4. Brennstoffverteiler nach Anspruch 1,
**dadurch gekennzeichnet,**
**dass** die erste Halbschale (2) und die zweite Halbschale (3) durch eine umfänglich entlang des Randes (34) der ersten Halbschale (2) und des Randes (35) der zweiten Halbschale (3) verlaufende Schweißnaht stoffschlüssig miteinander verbunden sind.

5. Brennstoffverteiler nach einem der Ansprüche 1 bis 4,
**dadurch gekennzeichnet,**
**dass** die Tassen (11 - 14) durch Tiefziehen der ersten Halbschale (2) beziehungsweise der zweiten Halbschale (3) ausgestaltet sind.

6. Brennstoffverteiler nach einem der Ansprüche 1 bis 5,
**dadurch gekennzeichnet,**
**dass** eine in den Brennstoffraum (7) führende Anschlussbuchse (8) vorgesehen ist und dass die erste Halbschale (2) und/oder die zweite Halbschale (3) zumindest eine Ausformung (9, 10) aufweist, in die die Anschlussbuchse (8) eingesetzt ist.

7. Brennstoffverteiler nach einem der Ansprüche 1 bis 6,
**dadurch gekennzeichnet,**
**dass** an der ersten Halbschale (2) und/oder an der zweiten Halbschale (3) zumindest eine Befestigungslasche (30, 31) angeformt ist.

8. Brennstoffverteiler nach Anspruch 7,
**dadurch gekennzeichnet,**
**dass** zwischen den Tassen (11 - 14) und dem Brennstoffraum (7) jeweils ein Verbindungskanal (20 - 23) vorgesehen ist, der durch eine Anprägung (19) an der ersten Halbschale (2) und/oder eine Anprägung (19) an der zweiten Halbschale (3) ausgestaltet ist.

9. Brennstoffverteiler nach einem der Ansprüche 1 bis 8,
**dadurch gekennzeichnet,**
**dass** ein Boden der Tassen (11 - 14) durch eine spanende Bearbeitung abgetragen ist.

10. Brennstoffverteiler nach einem der Ansprüche 1 bis 9,
**dadurch gekennzeichnet,**
**dass** die Tassen (11 - 14) als angesenkte oder angeprägte Tassen (11 - 14) ausgestaltet sind und/oder dass Innenwände (15 - 18) der Tassen (11 - 14) durch eine spanende Bearbeitung nachbearbeitet sind.

11. Verfahren zur Herstellung eines Brennstoffverteilers (1) nach einem der Ansprüche 1 bis 10, der insbesondere für Brennstoffeinspritzanlagen von gemischverdichtenden, fremdgezündeten Brennkraftmaschinen dient, mit folgenden Schritten:
a) Einbringen einer Lotfolie (6) zwischen eine Anlagefläche einer ersten Halbschale (2) und eine Anlagefläche (5) einer zweiten Halbschale (3), wobei die Anlagefläche (4) der ersten Halbschale (2) und die Anlagefläche (5) der zweiten Halbschale (3) einander zugewandt sind;
b) Zusammenpressen der ersten Halbschale (2) und der zweiten Halbschale (3) und
c) Verlöten der ersten Halbschale (2) mit der zweiten Halbschale (3) mittels eines Lötofens.

12. Verfahren zur Herstellung eines Brennstoffverteilers (1) nach einem der Ansprüche 1 bis 10, der insbesondere für Brennstoffeinspritzanlagen von gemischverdichtenden, fremdgezündeten Brennkraftmaschinen dient, mit folgenden Schritten:
a) Zusammensetzen einer ersten Blechhälfte (2) und einer zweiten Blechhälfte (3), so dass ein Rand (34) der ersten Blechhälfte (2) und ein Rand (35) der zweiten Blechhälfte (3) zumindest abschnittsweise nebeneinander liegen;
b) Verschweißen der ersten Blechhälfte (2) mit der zweiten Blechhälfte (3) umfänglich entlang des Randes (34) der ersten Blechhälfte (2) und des Randes (35) der zweiten Blechhälfte (3) und
c) Umformen der miteinander verschweißten Blechhälften (2, 3) zur Formung einer ersten Halbschale (2) aus der ersten Blechhälfte (2) und einer zweiten Halbschale (3) aus der zweiten Blechhälfte (3), wobei die Halbschalen (2, 3) miteinander verschweißt sind.

13. Verfahren nach Anspruch 12,
**dadurch gekennzeichnet,**
**dass** die miteinander verschweißten Blechhälften (2, 3) durch Einbringen eines unter hohem Druck stehenden Fluids zwischen die Blechhälften (2, 3) oder durch Magnetumformen umgeformt werden.

## Claims

1. Fuel distributor (1), in particular for fuel injection systems of mixture-compressing, applied-ignition internal combustion engines, having a first half-shell (2) and a second half-shell (3), between which there is formed a fuel chamber (7), wherein multiple cup-like structures (11 - 14) are provided on the first half-shell (2) and/or on the second half-shell (3), and wherein the first half-shell (2) and the second half-shell (3) are cohesively connected together, wherein an edge (34) is provided on the first half-shell (2) and an edge (35) is provided on the second half-shell (3), at which edges the half-shells (2, 3) are joined together, **characterized in that** the cup-like structures (11 - 14), which serve for receiving injection valves, are formed on one of said edges (34, 35) such that the cup-like structures (11 - 14) are situated apart from the fuel chamber (7) enclosed by the two half-shells (2, 3).

2. Fuel distributor according to Claim 1,
**characterized**
**in that** the first half-shell (2) has an abutment surface (4), and that the second half-shell (3) has an abutment surface (5), and that the abutment surface (4) of the first half-shell (2) and the abutment surface (5) of the second half-shell (3) face towards one another, and in that the first half-shell (2) and the second half-shell (3) are cohesively connected together by soldering by means of a solder introduced between the abutment surface (4) of the first half-shell (2) and the abutment surface (5) of the second half-shell (3).

3. Fuel distributor according to Claim 2,
**characterized**
**in that** the first half-shell (2) and the second half-shell (3) are cohesively connected together by soldering by means of a solder foil (6) introduced between the abutment surface (4) of the first half-shell (2) and the abutment surface (5) of the second half-shell (3).

4. Fuel distributor according to Claim 1,
**characterized**
**in that** the first half-shell (2) and the second half-shell (3) are cohesively connected together by means of a weld seam running circumferentially along the edge (34) of the first half-shell (2) and the edge (35) of the second half-shell (3).

5. Fuel distributor according to one of Claims 1 to 4,
**characterized**
**in that** the cup-like structures (11 - 14) are formed by deep drawing of the first half-shell (2) or of the second half-shell (3).

6. Fuel distributor according to one of Claims 1 to 5,
**characterized**
**in that** a connection socket (8) which leads into the fuel chamber (7) is provided, and in that the first half-shell (2) and/or the second half-shell (3) has at least one bulged portion (9, 10) into which the connection socket (8) is inserted.

7. Fuel distributor according to one of Claims 1 to 6,
**characterized**
**in that** at least one fastening lug (30, 31) is integrally formed on the first half-shell (2) and/or on the second half-shell (3).

8. Fuel distributor according to Claim 7,
**characterized**
**in that**, between the cup-like structures (11 - 14) and the fuel chamber (7), there is provided in each case one connecting duct (20 - 23) which is formed by a stamped formation (19) on the first half-shell (2) and/or a stamped formation (19) on the second half-shell (3).

9. Fuel distributor according to one of Claims 1 to 8,
**characterized in that**
a base of the cup-like structures (11 - 14) is removed by means of a cutting machining process.

10. Fuel distributor according to one of Claims 1 to 9,
**characterized**
**in that** the cup-like structures (11 - 14) are formed as countersunk or stamped cup-like structures (11 - 14), and/or in that inner walls (15 - 18) of the cup-like structures (11 - 14) are reworked by means of a cutting machining process.

11. Method for producing a fuel distributor (1) according to one of Claims 1 to 10, which serves in particular for fuel injection systems of mixture-compressing, applied-ignition internal combustion engines, having the following steps:
a) introducing a solder foil (6) between an abutment surface of a first half-shell (2) and an abutment surface (5) of a second half-shell (3), wherein the abutment surface (4) of the first half-shell (2) and the abutment surface (5) of the second half-shell (3) face towards one another;
b) pressing the first half-shell (2) and the second half-shell (3) together, and
c) soldering the first half-shell (2) to the second half-shell (3) by means of a soldering furnace.

12. Method for producing a fuel distributor (1) according to one of Claims 1 to 10, which serves in particular for fuel injection systems of mixture-compressing, applied-ignition internal combustion engines, having the following steps:
a) assembling a first sheet-metal half (2) and a second sheet-metal half (3) such that an edge (34) of the first sheet-metal half (2) and an edge (35) of the second sheet-metal half (3) are situated adjacent to one another at least in sections;
b) welding the first sheet-metal half (2) to the second sheet-metal half (3) circumferentially along the edge (34) of the first sheet-metal half (2) and the edge (35) of the second sheet-metal half (3), and
c) deforming the welded-together sheet-metal halves (2, 3) in order to form a first half-shell (2) from the first sheet-metal half (2) and a second half-shell (3) from the second sheet-metal half (3), wherein the half-shells (2, 3) are welded together.

13. Method according to Claim 12,
**characterized**
**in that** the welded-together sheet-metal halves (2, 3) are deformed by introduction of a highly pressurized fluid between the sheet-metal halves (2, 3) or by magnetic deformation.

## Revendications

1. Distributeur de carburant (1), en particulier pour des installations d'injection de carburant de moteurs à combustion interne à compression de mélange et allumage par étincelle, avec une première demi-coque (2) et une deuxième demi-coque (3), entre lesquelles une chambre de carburant (7) est formée, dans lequel il est prévu sur la première demi-coque (2) et/ou la deuxième demi-coque (3) plusieurs alvéoles (11 - 14) et dans lequel la première demi-coque (2) et la deuxième demi-coque (3) sont matériellement assemblées l'une à l'autre, dans lequel il est prévu sur la première demi-coque (2) un bord (34) et sur la deuxième demi-coque (3) un bord (35), sur lesquels les demi-coques (2, 3) sont jointes l'une à l'autre,
**caractérisé en ce que** les alvéoles (11 - 14), qui sont destinées à recevoir des injecteurs, sont installées sur un de ces bords (34, 35), de telle manière que les alvéoles (11 - 14) se situent à l'écart de la chambre de carburant (7) enfermée par les deux demi-coques (2, 3).

2. Distributeur de carburant selon la revendication 1, **caractérisé en ce que** la première demi-coque (2) présente une face d'appui (4), **en ce que** la deuxième demi-coque (3) présente une face d'appui (5), **en ce que** la face d'appui (4) de la première demi-coque (2) et la face d'appui (5) de la deuxième demi-coque (3) sont tournées l'une vers l'autre et **en ce que** la première demi-coque (2) et la deuxième demi-coque (3) sont assemblées matériellement l'une à l'autre par brasage au moyen d'un métal de brasage introduit entre la face d'appui (4) de la première demi-coque (2) et la face d'appui (5) de la deuxième demi-coque (3).

3. Distributeur de carburant selon la revendication 2, **caractérisé en ce que** la première demi-coque (2) et la deuxième demi-coque (3) sont assemblées matériellement l'une à l'autre par brasage au moyen d'une feuille de brasage (6) introduite entre la face d'appui (4) de la première demi-coque (2) et la face d'appui (5) de la deuxième demi-coque (3).

4. Distributeur de carburant selon la revendication 1, **caractérisé en ce que** la première demi-coque (2) et la deuxième demi-coque (3) sont assemblées matériellement l'une à l'autre par un cordon de soudure s'étendant en périphérie le long du bord (34) de la première demi-coque (2) et du bord (35) de la deuxième demi-coque (3).

5. Distributeur de carburant selon l'une quelconque des revendications 1 à 4, **caractérisé en ce que** les alvéoles (11 - 14) sont formées par emboutissage profond de la première demi-coque (2) ou de la deuxième demi-coque (3).

6. Distributeur de carburant selon l'une quelconque des revendications 1 à 5, **caractérisé en ce qu'**il est prévu une douille de raccordement (8) conduisant dans la chambre de carburant (7) et **en ce que** la première demi-coque (2) et/ou la deuxième demi-coque (3) présente au moins une déformation (9, 10), dans laquelle la douille de raccordement (8) est introduite.

7. Distributeur de carburant selon l'une quelconque des revendications 1 à 6, **caractérisé en ce qu'**au moins une patte de fixation (30, 31) est formée sur la première demi-coque (2) et/ou sur la deuxième demi-coque (3).

8. Distributeur de carburant selon la revendication 7, **caractérisé en ce qu'**il est prévu entre les alvéoles (11 - 14) et la chambre de carburant (7) respectivement un canal de raccordement (20 - 23), qui est formé par une empreinte (19) sur la première demi-coque (2) et/ou par une empreinte (19) sur la deuxième demi-coque (3).

9. Distributeur de carburant selon l'une quelconque des revendications 1 à 8, **caractérisé en ce qu'**un fond des alvéoles (11 - 14) est enlevé par un usinage avec enlèvement de copeaux.

10. Distributeur de carburant selon l'une quelconque des revendications 1 à 9, **caractérisé en ce que** les alvéoles (11 - 14) sont réalisées sous forme d'alvéoles enfoncées ou embouties (11 - 14) et/ou **en ce que** des parois intérieures (15 - 18) des alvéoles (11 - 14) sont achevées par un usinage avec enlèvement de copeaux.

11. Procédé de fabrication d'un distributeur de carburant (1) selon l'une quelconque des revendications 1 à 10, qui sert en particulier pour des installations d'injection de carburant de moteurs à combustion interne à compression de mélange et à allumage par étincelle, comprenant les étapes suivantes:
a) introduire une feuille de brasage (6) entre une face d'appui d'une première demi-coque (2) et une face d'appui (5) d'une deuxième demi-coque (3), dans lequel la face d'appui (4) de la première demi-coque (2) et la face d'appui (5) de la deuxième demi-coque (3) sont tournées l'une vers l'autre;
b) presser l'une sur l'autre la première demi-coque (2) et la deuxième demi-coque (3); et
c) braser la première demi-coque (2) avec la deuxième demi-coque (3) au moyen d'un four de brasage.

12. Procédé de fabrication d'un distributeur de carburant (1) selon l'une quelconque des revendications 1 à 10, qui sert en particulier pour des installations d'injection de carburant de moteurs à combustion interne à compression de mélange et à allumage par étincelle, comprenant les étapes suivantes:
a) assembler une première moitié de tôle (2) et une deuxième moitié de tôle (3), de telle manière qu'un bord (34) de la première moitié de tôle (2) et un bord (35) de la deuxième moitié de tôle (3) soient situés au moins en partie l'un à côté de l'autre;
b) souder la première moitié de tôle (2) avec la deuxième moitié de tôle (3) en périphérie le long du bord (34) de la première moitié de tôle (2) et du bord (35) de la deuxième moitié de tôle (3); et
c) déformer les moitiés de tôle (2, 3) soudées l'une à l'autre pour former une première demi-coque (2) à partir de la première moitié de tôle (2) et une deuxième demi-coque (3) à partir de la deuxième moitié de tôle (3), dans lequel les demi-coques (2, 3) sont soudées l'une à l'autre.

13. Procédé selon la revendication 12, **caractérisé en ce que** l'on déforme les moitiés de tôle (2, 3) soudées l'une à l'autre par l'introduction d'un fluide se trouvant sous haute pression entre les moitiés de tôle (2, 3) ou par déformation magnétique.
